# EUROPEAN PATENT SPECIFICATION

(11) **EP 2 783 282 B1**
(45) Date of publication and mention of the grant of the patent: **24.06.2020**
(21) Application number: 11876130.3
(22) Date of filing: 22.11.2011
(51) Int. Cl.: G06F 9/38

(54) **A MICROPROCESSOR ACCELERATED CODE OPTIMIZER AND DEPENDENCY REORDERING METHOD**
MIKROPROZESSORBESCHLEUNIGTER CODEOPTIMIERER UND ABHÄNGIGKEITSUMSTELLUNGSVERFAHREN
DISPOSITIF D'OPTIMISATION ACCÉLÉRÉE DE CODES POUR MICROPROCESSEUR ET PROCÉDÉ DE RÉORGANISATION DE DÉPENDANCES

(43) Date of publication of application: 01.10.2014
(73) Proprietor: Intel Corporation, Santa Clara, CA 95054 (US)
(72) Inventor: ABDALLAH, Mohammad, San Jose, CA 95132 (US)
(74) Representative: Goddar, Heinz J.
(86) International application number: PCT/US2011/061940
(87) International publication number: WO 2013/077872

(56) References cited:
- WO-A2-2007/027671
- US-A- 5 710 902
- US-A- 5 710 902
- US-A- 6 065 105
- US-A- 6 065 105
- US-A- 6 065 105
- US-A1- 2003 126 408
- US-A1- 2010 058 033
- US-B1- 6 728 866
- US-B2- 6 920 530
- SASSONE P G ET AL: "Dynamic Strands: Collapsing Speculative Dependence Chains for Reducing Pipeline Communication", MICROARCHITECTURE, 2004. MICRO-37 2004. 37TH INTERNATIONAL SYMPOSIUM O N PORTLAND, OR, USA 04-08 DEC. 2004, PISCATAWAY, NJ, USA,IEEE, 4 December 2004 (2004-12-04), pages 7-17, XP010859308, DOI: 10.1109/MICRO.2004.16 ISBN: 978-0-7695-2126-8

## Description

### CROSS REFERENCE TO RELATED APPLICATION

This application is related to co-pending commonly assigned US Patent Application serial number 2010/0161948, titled "APPARATUS AND METHOD FOR

PROCESSING COMPLEX INSTRUCTION FORMATS IN A MULTITHREADED ARCHITECTURE SUPPORTING VARIOUS CONTEXT SWITCH MODES AND VIRTUALIZATION SCHEMES" by Mohammad A. Abdallah, filed on January 5, 2010.

This application is related to co-pending commonly assigned US Patent Application serial number 2009/0113170, titled "APPARATUS AND METHOD FOR

PROCESSING AN INSTRUCTION MATRIX SPECIFYING PARALLEL IN DEPENDENT OPERATIONS" by Mohammad A. Abdallah, filed on December 19, 2008.

This application is related to co-pending commonly assigned US Patent Application serial number 61/384,198, titled "SINGLE CYCLE MULTI-BRANCH PREDICTION INCLUDING SHADOW CACHE FOR EARLY FAR BRANCH PREDICTION" by Mohammad A. Abdallah, filed on September 17, 2010.

This application is related to co-pending commonly assigned US Patent Application serial number 61/467,944, titled "EXECUTING INSTRUCTION SEQUENCE CODE BLOCKS BY USING VIRTUAL CORES INSTANTIATED BY PARTITIONABLE ENGINES" by Mohammad A. Abdallah, filed on March 25, 2011.

### FIELD OF THE INVENTION

The present invention is generally related to digital computer systems, more particularly, to a system and method for selecting instructions comprising an instruction sequence.

### BACKGROUND OF THE INVENTION

Processors are required to handle multiple tasks that are either dependent or totally independent. The internal state of such processors usually consists of registers that might hold different values at each particular instant of program execution. At each instant of program execution, the internal state image is called the architecture state of the processor.

When code execution is switched to run another function (e.g., another thread, process or program), then the state of the machine/processor has to be saved so that the new function can utilize the internal registers to build its new state. Once the new function is terminated then its state can be discarded and the state of the previous context will be restored and execution resumes. Such a switch process is called a context switch and usually includes 10's or hundreds of cycles especially with modern architectures that employ large number of registers (e.g., 64, 128, 256) and/or out of order execution.

In thread-aware hardware architectures, it is normal for the hardware to support multiple context states for a limited number of hardware-supported threads. In this case, the hardware duplicates all architecture state elements for each supported thread. This eliminates the need for context switch when executing a new thread. However, this still has multiple draw backs, namely the area, power and complexity of duplicating all architecture state elements (i.e., registers) for each additional thread supported in hardware. In addition, if the number of software threads exceeds the number of explicitly supported hardware threads, then the context switch must still be performed.

This becomes common as parallelism is needed on a fine granularity basis requiring a large number of threads. The hardware thread-aware architectures with duplicate context-state hardware storage do not help non-threaded software code and only reduces the number of context switches for software that is threaded.

However, those threads are usually constructed for coarse grain parallelism, and result in heavy software overhead for initiating and synchronizing, leaving fine grain parallelism, such as function calls and loops parallel execution, without efficient threading initiations/auto generation. Such described overheads are accompanied with the difficulty of auto parallelization of such codes using sate of the art compiler or user parallelization techniques for non-explicitly/easily parallelized/threaded software codes

US 6 728 866 B1 discloses a true dependency between a first instruction and a second instruction if the second instruction requires a result generated by the first instruction. Buffers are allocated for storing the result of an instruction prior to committing the result. A dependency logic determines instruction dependencies by recording source and destination operands of each instruction currently awaiting execution in an issue queue. As new instructions arrive, their operands are compared with the operands of pending instructions to determine if the new instruction requires an operand of another pending instructions.

US 6 065 105 discloses receiving in-order instructions and re-ordering these based on data dependencies. Logical destinations are renamed to physical destinations in order to avoid artificial dependencies. When two instructions with a same destination are received, the first value is overwritten when the second instruction is executed, if no renaming is applied. The dependency is removed by changing the logical destination to a physical destination.

In "SASSONE P G ET AL: 'Dynamic Strands: Collapsing Speculative Dependence Chains for Reducing Pipeline Communication', MICROARCHITECTURE, 2004. MICRO-37 204. 37TH INTERNATIONAL SYMPOSIUM O N PORTLAND, OR, USA 04-08 DEC. 2004, PISCATAWAY, NJ, USA, IEEE, 4 December 2004 (2004-12-04), pages 7-17, XP010859308, DOI: 10.1109/MICRO.2004.16 ISBN: 978-0-7695-2126-8", grouping of instructions based on true dependencies is disclosed.

### SUMMARY OF THE INVENTION

In one embodiment the present invention is implemented as a computer implemented dependency reordering method. The method includes accessing an input sequence of instructions, initializing three registers, and loading instruction numbers into a first register. The method further includes loading destination register numbers into a second register, broadcasting values from the first register to a position in a third register in accordance with a position number in the second register, overwriting positions in the third register in accordance with position numbers in the second register, and using information in the third register to populate a dependency matrix for grouping dependent instructions from the sequence of instructions.

The foregoing is a summary and thus contains, by necessity, simplifications, generalizations and omissions of detail; consequently, those skilled in the art will appreciate that the summary is illustrative only and is not intended to be in any way limiting. Other aspects, inventive features, and advantages of the present invention, as defined solely by the claims, will become apparent in the non-limiting detailed description set forth below.

### BRIEF DESCRIPTION OF THE DRAWINGS

The present invention is illustrated by way of example, and not by way of limitation, in the figures of the accompanying drawings and in which like reference numerals refer to similar elements.
Figure 1 shows an overview diagram of an allocation/issue stage of a microprocessor in accordance with one embodiment of the present invention.
Figure 2 shows an overview diagram illustrating an optimization process in accordance with one embodiment of the present invention.
Figure 3 shows a multistep optimization process in accordance with one embodiment of the present invention.
Figure 4 shows a multistep optimization and instruction moving process in accordance with one embodiment of the present invention.
Figure 5 shows a flowchart of the steps of an exemplary hardware optimization process in accordance with one embodiment of the present invention.
Figure 6 shows a flowchart of the steps of an alternative exemplary hardware optimization process in accordance with one embodiment of the present invention.
Figure 7 shows a diagram showing the operation of the CAM matching hardware and the priority encoding hardware of the allocation/issue stage in accordance with one embodiment of the present invention.
Figure 8 shows a diagram illustrating optimized scheduling ahead of a branch in accordance with one embodiment of the present invention.
Figure 9 shows a diagram illustrating optimized scheduling ahead of a store in accordance with one embodiment of the present invention.
Figure 10 shows a diagram of an exemplary software optimization process in accordance with one embodiment of the present invention.
Figure 11 shows a flow diagram of a SIMD software -based optimization process in accordance with one embodiment of the present invention.
Figure 12 shows a flowchart of the operating steps of an exemplary SIMD software-based optimization process.
Figure 13 shows a software based dependency broadcast process.
Figure 14 shows an exemplary flow diagram that shows how the dependency grouping of instructions can be used to build variably bounded groups of dependent instructions in accordance with one embodiment of the present invention.
Figure 15 shows a flow diagram depicting hierarchical scheduling of instructions in accordance with one embodiment of the present invention.
Figure 16 shows a flow diagram depicting hierarchical scheduling of three slot dependency group instructions in accordance with one embodiment of the present invention.
Figure 17 shows a flow diagram depicting hierarchical moving window scheduling of three slot dependency group instructions in accordance with one embodiment of the present invention.
Figure 18 shows how the variably sized dependent chains (e.g., variably bounded groups) of instructions are allocated to a plurality of computing engines in accordance with one embodiment of the present invention.
Figure 19 shows a flow diagram depicting block allocation to the scheduling queues and the hierarchical moving window scheduling of three slot dependency group instructions in accordance with one embodiment of the present invention.
Figure 20 shows how the dependent code blocks (e.g., dependency groups or dependency chains) are executed on the engines in accordance with one embodiment of the present invention.
Figure 21 shows an overview diagram of a plurality of engines and their components, including a global front end fetch & scheduler and register files, global interconnects and a fragmented memory subsystem for a multicore processor in accordance with one embodiment of the present invention.
Figure 22 shows a plurality of segments, a plurality of segmented common partition schedulers and the interconnect and the ports into the segments in accordance with one embodiment of the present invention.
Figure 23 shows a diagram of an exemplary microprocessor pipeline in accordance with one embodiment of the present invention.

### DETAILED DESCRIPTION OF THE INVENTION

Although the present invention has been described in connection with one embodiment, the invention is not intended to be limited to the specific forms set forth herein. On the contrary, it is intended to cover such alternatives, modifications, and equivalents as can be reasonably included within the scope of the invention as defined by the appended claims.

In the following detailed description, numerous specific details such as specific method orders, structures, elements, and connections have been set forth. It is to be understood however that these and other specific details need not be utilized to practice embodiments of the present invention. In other circumstances, well-known structures, elements, or connections have been omitted, or have not been described in particular detail in order to avoid unnecessarily obscuring this description.

References within the specification to "one embodiment" or "an embodiment" are intended to indicate that a particular feature, structure, or characteristic described in connection with the embodiment is included in at least one embodiment of the present invention. The appearance of the phrase "in one embodiment" in various places within the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Some portions of the detailed descriptions, which follow, are presented in terms of procedures, steps, logic blocks, processing, and other symbolic representations of operations on data bits within a computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals of a computer readable storage medium and are capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "processing" or "accessing" or "writing" or "storing" or "replicating" or the like, refer to the action and processes of a computer system, or similar electronic computing device that manipulates and transforms data represented as physical (electronic) quantities within the computer system's registers and memories and other computer readable media into other data similarly represented as physical quantities within the computer system memories or registers or other such information storage, transmission or display devices.

In one embodiment the present invention is implemented as a method for accelerating code optimization in a microprocessor. The method includes fetching an incoming microinstruction sequence using an instruction fetch component and transferring the fetched macroinstructions to a decoding component for decoding into microinstructions. Optimization processing is performed by reordering the microinstruction sequence into an optimized microinstruction sequence comprising a plurality of dependent code groups. The optimized microinstruction sequence is output to a microprocessor pipeline for execution. A copy of the optimized microinstruction sequence is stored into a sequence cache for subsequent use upon a subsequent hit to the optimized microinstruction sequence.

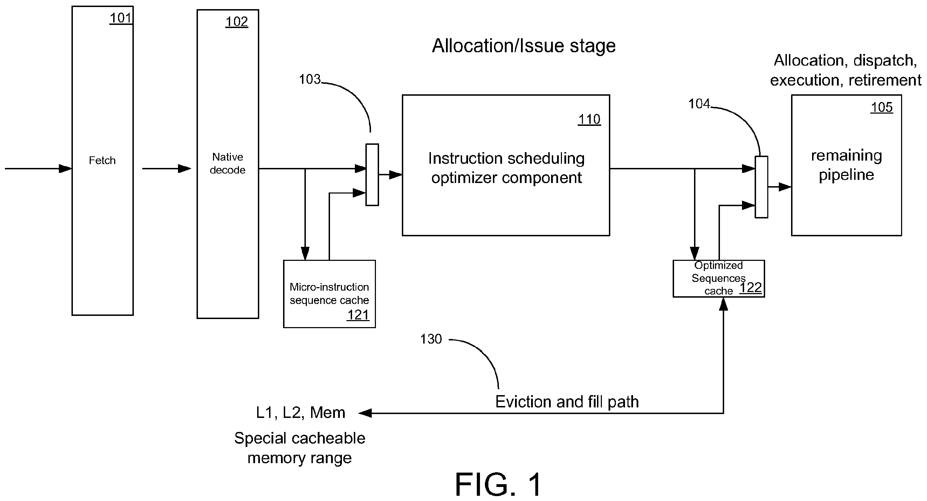

Figure 1 shows an overview diagram of an allocation/issue stage of a microprocessor 100 in accordance with one embodiment of the present invention. As illustrated in Figure 1, the microprocessor 100 includes a fetch component 101, a native decode component 102, and instruction scheduling and optimizing component 110 and the remaining pipeline 105 of the microprocessor.

In the Figure 1 embodiment, macroinstructions are fetched by a fetch component 101 and decoded into native microinstructions by the native decode component 102., which then provides the microinstructions to a microinstruction cache 121 and the instruction scheduling and optimizer component 110. In one embodiment, the fetched macroinstructions comprise a sequence of instructions that is assembled by predicting certain branches.

The macroinstruction sequence is decoded into a resulting microinstruction sequence by the native decode component 102. This microinstruction sequence is then transmitted to the instruction scheduling and optimizing component 110 through a multiplexer 103. The instruction scheduling and optimizer component functions by performing optimization processing by, for example, reordering certain instructions of the microinstruction sequence for more efficient execution. This results in an optimized microinstruction sequence that is then transferred to the remaining pipeline 105 (e.g., the allocation, dispatch, execution, and retirement stages, etc.) through the multiplexer 104. The optimized microinstruction sequence results in a faster and more efficient execution of the instructions.

In one embodiment, the macroinstructions can be instructions from a high level instruction set architecture, while the microinstructions are low level machine instructions. In another embodiment, the macroinstructions can be guest instructions from a plurality of different instruction set architectures (e.g., CISC like, x86, RISC like, MIPS, SPARC, ARM, virtual like, JAVA, and the like), while the microinstructions are low level machine instructions or instructions of a different native instruction set architecture. Similarly, in one embodiment, the macroinstructions can be native instructions of an architecture, and the microinstructions can be native microinstructions of that same architecture that have been reordered and optimized. For example X86 macro instructions and X86 micro-coded microinstructions.

In one embodiment, to accelerate the execution performance of code that is frequently encountered (e.g., hot code), copies of frequently encountered microinstruction sequences are cached in the microinstruction cache 121 and copies of frequently encountered optimized microinstruction sequences are cached within the sequence cache 122. As code is fetched, decoded, optimized, and executed, certain optimized microinstruction sequences can be evicted or fetched in accordance with the size of the sequence cache through the depicted eviction and fill path 130. This eviction and fill path allows for transfers of optimized microinstruction sequences to and from the memory hierarchy of the microprocessor (e.g., L1 cache, L2 cache, a special cacheable memory range, or the like).

It should be noted that in one embodiment, the microinstruction cache 121 can be omitted. In such an embodiment, the acceleration of hot code is provided by the storing of optimized microinstruction sequences within the sequence cache 122. For example, the space saved by omitting microinstruction cache 121 can be used to implement a larger sequence cache 122, for example.

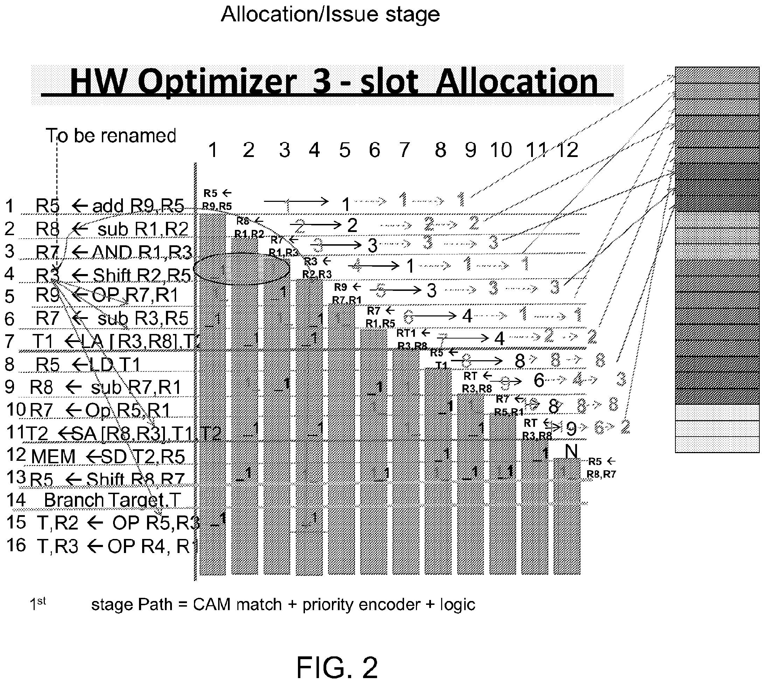

Figure 2 shows an overview diagram illustrating an optimization process in accordance with one embodiment of the present invention. The left-hand side of Figure 2 shows an incoming microinstruction sequence as received from, for example, the native decode component 102 or the microinstruction cache 121. Upon first receiving these instructions, they are not optimized.

One objective of the optimization process is to locate and identify instructions that depend upon one another and move them into their respective dependency groups so that they can execute more efficiently. In one embodiment, groups of dependent instructions can be dispatched together so that they can execute more efficiently since their respective sources and destinations are grouped together for locality. It should be noted that this optimization processing can be used in both an out of order processor as well as an in order processor. For example, within an in order processor, instructions are dispatched in-order. However, they can be moved around so that dependent instructions are placed in respective groups so that groups can then execute independently, as described above.

For example, the incoming instructions include loads, operations and stores. For example, instruction 1 comprises an operation where source registers (e.g., register 9 and register 9) are added and the result stored in register 5. Hence, register 5 is a destination and register 9 and register 5 are sources. In this manner, the sequence of 16 instructions includes destination registers and source registers, as shown.

The Figure 2 embodiment implements the reordering of instructions to create dependency groups where instructions that belong to a group are dependent upon one another. To accomplish this, an algorithm is executed that performs hazard checks with respect to the loads and stores of the 16 incoming instructions. For example, stores cannot move past earlier loads without dependency checks. Stores cannot pass earlier stores. Loads cannot pass earlier stores without dependency checks. Loads can pass loads. Instructions can pass prior path predicted branches (e.g., dynamically constructed branches) by using a renaming technique. In the case of non-dynamically predicted branches, movements of instructions need to consider the scopes of the branches. Each of the above rules can be implemented by adding virtual dependency (e.g., by artificially adding virtual sources or destinations to instructions to enforce the rules).

Referring still to Figure 2, as described above, an objective of the optimization process is to locate dependent instructions and move them into a common dependency group. This process must be done in accordance with the hazard checking algorithm. The optimization algorithm is looking for instruction dependencies. The instruction dependencies further comprise true dependencies, output dependencies and anti-dependencies.

The algorithm begins by looking for true dependencies first. To identify true dependencies, each destination of the 16 instruction sequence is compared against other subsequent sources which occur later in the 16 instruction sequence. The subsequent instructions that are truly dependent on an earlier instruction are marked "_1" to signify their true dependence. This is shown in Figure 2 by the instruction numbers that proceed from left to right over the 16 instruction sequence. For example, considering instruction number 4, the destination register R3 is compared against the subsequent instructions' sources, and each subsequent source is marked "_1" to indicate that instruction's true dependence. In this case, instruction 6, instruction 7, instruction 11, and instruction 15 are marked "_1".

The algorithm then looks for output dependencies. To identify output dependencies, each destination is compared against other subsequent instructions' destinations. And for each of the 16 instructions, each subsequent destination that matches is marked "1_" (e.g., sometimes referred to as a red one).

The algorithm then looks for anti-dependencies. To identify anti-dependencies, for each of the 16 instructions, each source is compared with earlier instructions' sources to identify matches. If a match occurs, the instruction under consideration marks its self "1_" (e.g., sometimes referred to as a red one).

In this manner, the algorithm populates a dependency matrix of rows and columns for the sequence of 16 instructions. The dependency matrix comprises the marks that indicate the different types of dependencies for each of the 16 instructions. In one embodiment, the dependency matrix is populated in one cycle by using CAM matching hardware and the appropriate broadcasting logic. For example, destinations are broadcasted downward through the remaining instructions to be compared with subsequent instructions' sources (e.g., true dependence) and subsequent instructions' destinations (e.g., output dependence), while destinations can be broadcasted upward through the previous instructions to be compared with prior instructions' sources (e.g., anti dependence).

The optimization algorithm uses the dependency matrix to choose which instructions to move together into common dependency groups. It is desired that instructions which are truly dependent upon one another be moved to the same group. Register renaming is used to eliminate anti-dependencies to allow those anti-dependent instructions to be moved. The moving is done in accordance with the above described rules and hazard checks. For example, stores cannot move past earlier loads without dependency checks. Stores cannot past earlier stores. Loads cannot pass earlier stores without dependency checks. Loads can pass loads. Instructions can pass prior path predicted branches (e.g., dynamic the constructed branches) by using a renaming technique. In the case of non-dynamically predicted branches, movements of instructions need to consider the scopes of the branches. Note for the description

In one embodiment, a priority encoder can be implemented to determine which instructions get moved to be grouped with other instructions. The priority encoder would function in accordance with the information provided by the dependency matrix.

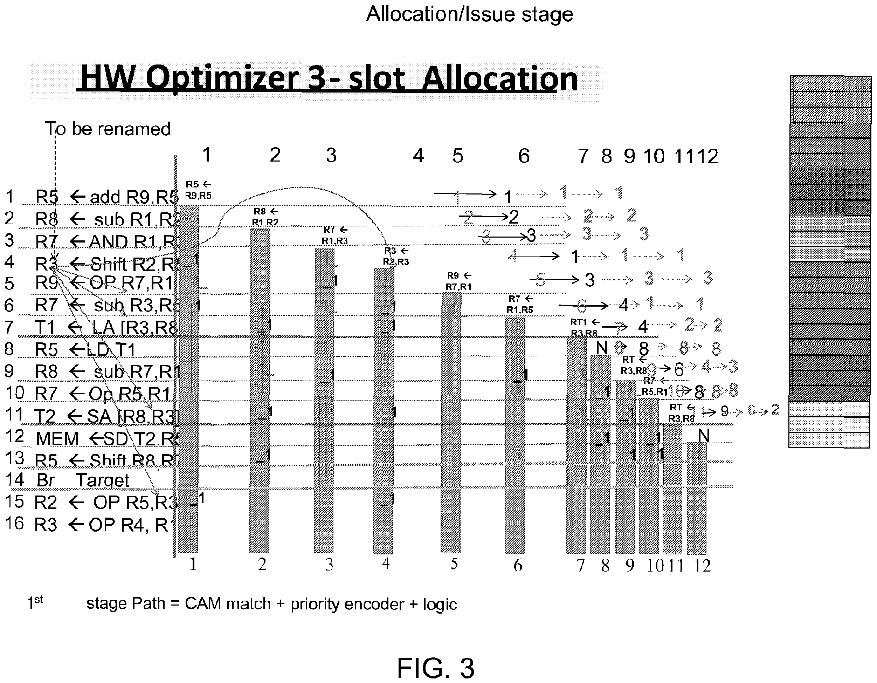

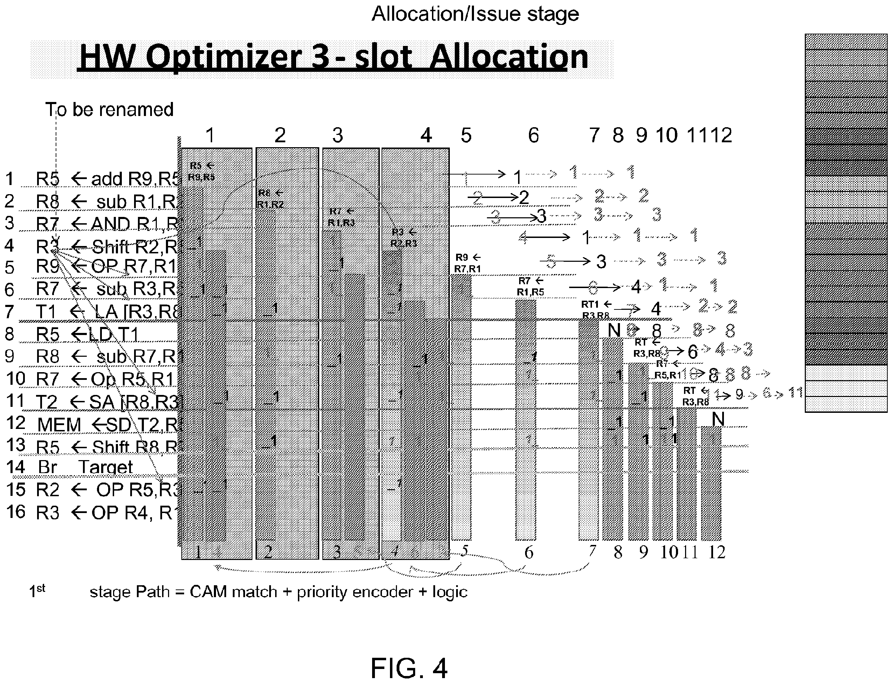

Figure 3 and Figure 4 show a multistep optimization process in accordance with one embodiment of the present invention. In one embodiment, the optimization process is iterative, in that after instructions are moved in a first pass by moving their dependency column, the dependency matrix is repopulated and examined again for new opportunities to move instructions. In one embodiment, this dependency matrix population process is repeated three times. This is shown in Figure 4, which show instructions that have been moved and then examined again looking for opportunities to move other instructions. The sequence of numbers on the right hand side of each of the 16 instructions shows the group that the instruction was in that it began the process with and the group that the instruction was in at the finish of the process, with the intervening group numbers in between. For example, Figure 4 shows how instruction 6 was initially in group 4 but was moved to be in group 1.

In this manner, Figures 2 through 4 illustrate the operation of an optimization algorithm in accordance with one embodiment of the present invention. It should be noted that although Figures 2 through 4 illustrate an allocation/issue stage, this functionality can also be implemented in a local scheduler/dispatch stage.

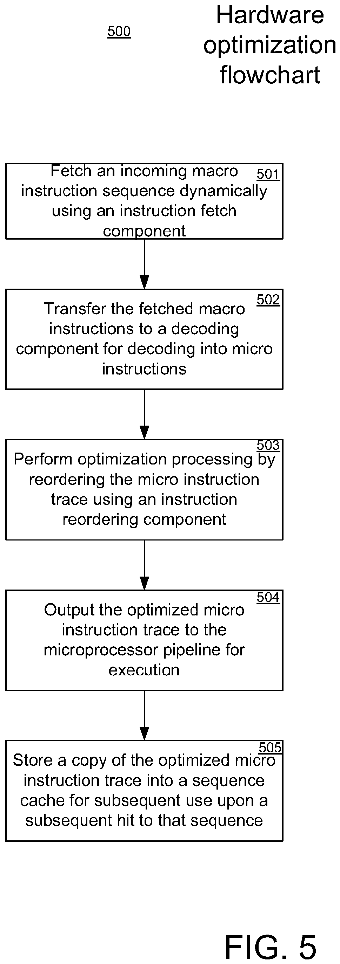

Figure 5 shows a flowchart of the steps of an exemplary hardware optimization process 500 in accordance with one embodiment of the present invention. As depicted in Figure 5, the flowchart shows the operating steps of a optimization process as implemented in an allocation/issue stage of a microprocessor in accordance with one embodiment of the present invention.

Process 500 begins in step 501, where an incoming macroinstruction sequence is fetched using an instruction fetch component (e.g., fetch component 20 from Figure 1). As described above, the fetched instructions comprise a sequence that is assembled by predicting certain instruction branches.

In step 502, the fetched macroinstructions are transferred to a decoding component for decoding into microinstructions. The macroinstruction sequence is decoded into a microinstruction sequence in accordance with the branch predictions. In one embodiment, the microinstruction sequence is then stored into a microinstruction cache.

In step 503, optimization processing is then conducted on the microinstruction sequence by reordering the microinstructions comprising sequence into dependency groups. The reordering is implemented by an instruction reordering component (e.g., the instruction scheduling and optimizer component 110). This process is described in the Figures 2 through 4.

In step 504, the optimized microinstruction sequence is an output to the microprocessor pipeline for execution. As described above, the optimized microinstruction sequence is forwarded to the rest of the machine for execution (e.g., remaining pipeline 105).

And subsequently, in step 505, a copy of the optimized microinstruction sequence is stored into a sequence cache for subsequent use upon a subsequent hit to that sequence. In this manner, the sequence cache enables access to the optimized microinstruction sequences upon subsequent hits on those sequences, thereby accelerating hot code.

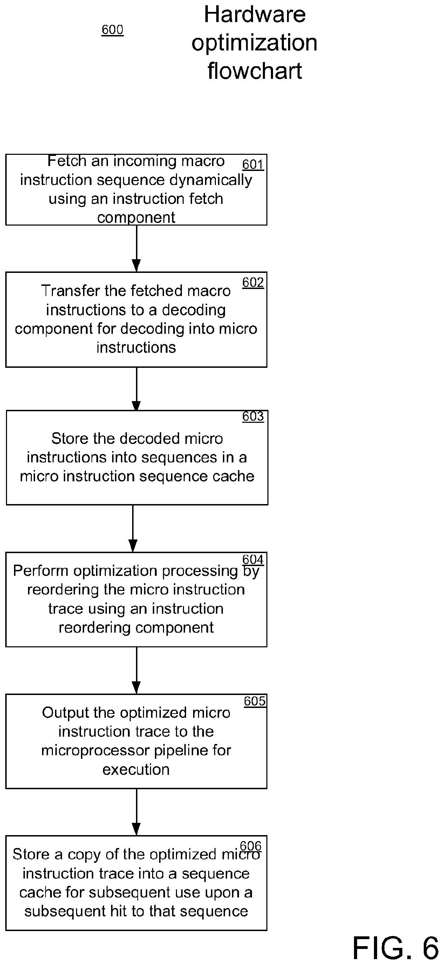

Figure 6 shows a flowchart of the steps of an alternative exemplary hardware optimization process 600 in accordance with one embodiment of the present invention. As depicted in Figure 6, the flowchart shows the operating steps of a optimization process as implemented in an allocation/issue stage of a microprocessor in accordance with an alternative embodiment of the present invention.

Process 600 begins in step 601, where an incoming macroinstruction sequence is fetched using an instruction fetch component (e.g., fetch component 20 from Figure 1). As described above, the fetched instructions comprise a sequence that is assembled by predicting certain instruction branches.

In step 602, the fetched macroinstructions are transferred to a decoding component for decoding into microinstructions. The macroinstruction sequence is decoded into a microinstruction sequence in accordance with the branch predictions. In one embodiment, the microinstruction sequence is then stored into a microinstruction cache.

In step 603, the decoded micro instructions are stored into sequences in a micro instruction sequence cache. Sequences in the micro instruction cache are formed to start in accordance with basic block boundaries. These sequences are not optimized at this point.

In step 604, optimization processing is then conducted on the microinstruction sequence by reordering the microinstructions comprising sequence into dependency groups. The reordering is implemented by an instruction reordering component (e.g., the instruction scheduling and optimizer component 110). This process is described in the Figures 2 through 4.

In step 605, the optimized microinstruction sequence is an output to the microprocessor pipeline for execution. As described above, the optimized microinstruction sequence is forwarded to the rest of the machine for execution (e.g., remaining pipeline 105).

And subsequently, in step 606, a copy of the optimized microinstruction sequence is stored into a sequence cache for subsequent use upon a subsequent hit to that sequence. In this manner, the sequence cache enables access to the optimized microinstruction sequences upon subsequent hits on those sequences, thereby accelerating hot code.

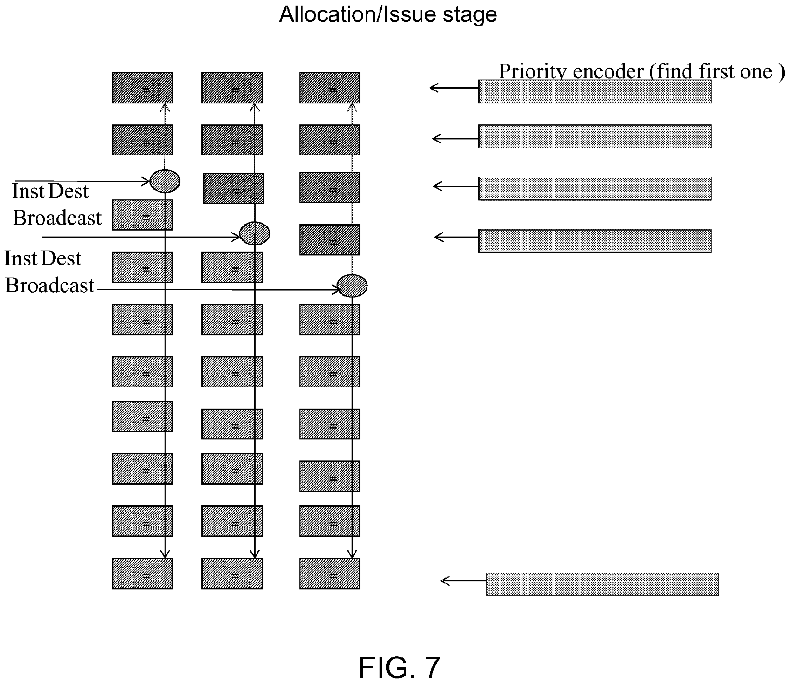

Figure 7 shows a diagram showing the operation of the CAM matching hardware and the priority encoding hardware of the allocation/issue stage in accordance with one embodiment of the present invention. As depicted in Figure 7, destinations of the instructions are broadcast into the CAM array from the left. Three exemplary instruction destinations are shown. The lighter shaded CAMs (e.g. green) are for true dependency matches and output dependency matches, and thus the destinations are broadcast downward. The darker shaded CAMs (e.g. blue) anti-dependency matches, and thus the destinations are broadcast upward. These matches populate a dependency matrix, as described above. Priority encoders are shown on the right, and they function by scanning the row of CAMS to find the first match, either a "_1" or a "1_". As described above in the discussions of Figures 2-4, the process can be implemented to be iterative. For example, if a "_1" is blocked by a "1_", then that destination can be renamed and moved.

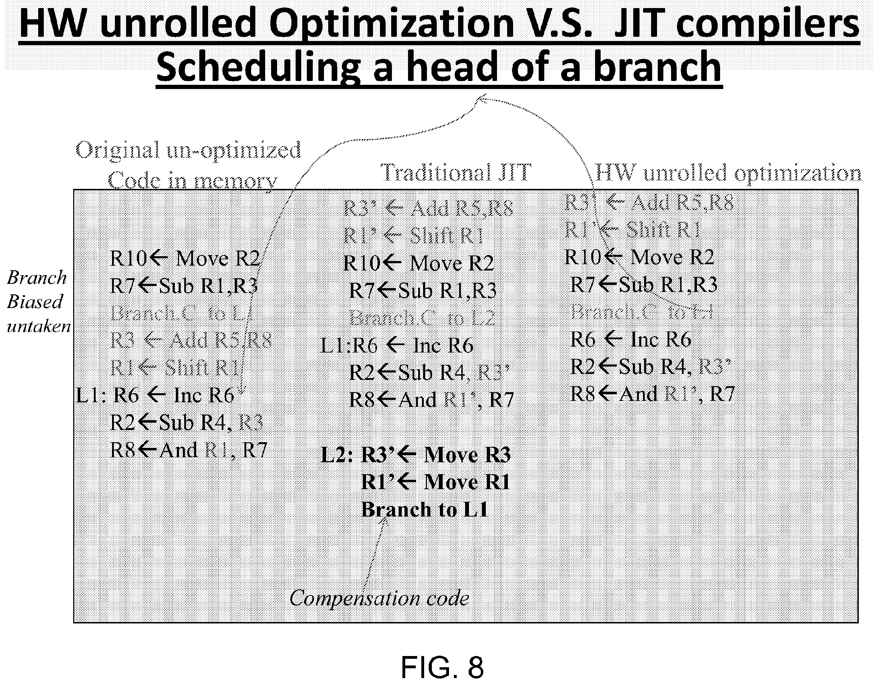

Figure 8 shows a diagram illustrating optimized scheduling instructions ahead of a branch in accordance with one embodiment of the present invention. As illustrated in Figure 8, a hardware optimized example is depicted alongside a traditional just-in-time compiler example. The left-hand side of Figure 8 shows the original un-optimized code including the branch biased untaken, "Branch C to LI". The middle column of Figure 8 shows a traditional just-in-time compiler optimization, where registers are renamed and instructions are moved ahead of the branch. In this example, the just-in-time compiler inserts compensation code to account for those occasions where the branch biased decision is wrong (e.g., where the branch is actually taken as opposed to untaken). In contrast, the right column of Figure 8 shows the hardware unrolled optimization. In this case, the registers are renamed and instructions are moved ahead of the branch. However, it should be noted that no compensation code is inserted. The hardware keeps track of whether branch biased decision is true or not. In case of wrongly predicted branches, the hardware automatically rolls back it's state in order to execute the correct instruction sequence. The hardware optimizer solution is able to avoid the use of compensation code because in those cases where the branch is miss predicted, the hardware jumps to the original code in memory and executes the correct sequence from there, while flushing the miss predicted instruction sequence.

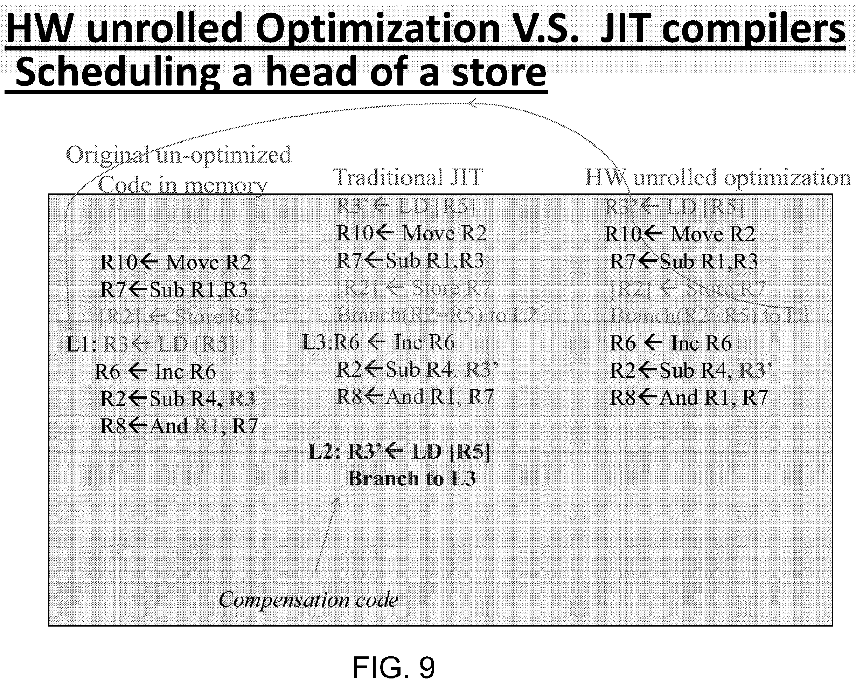

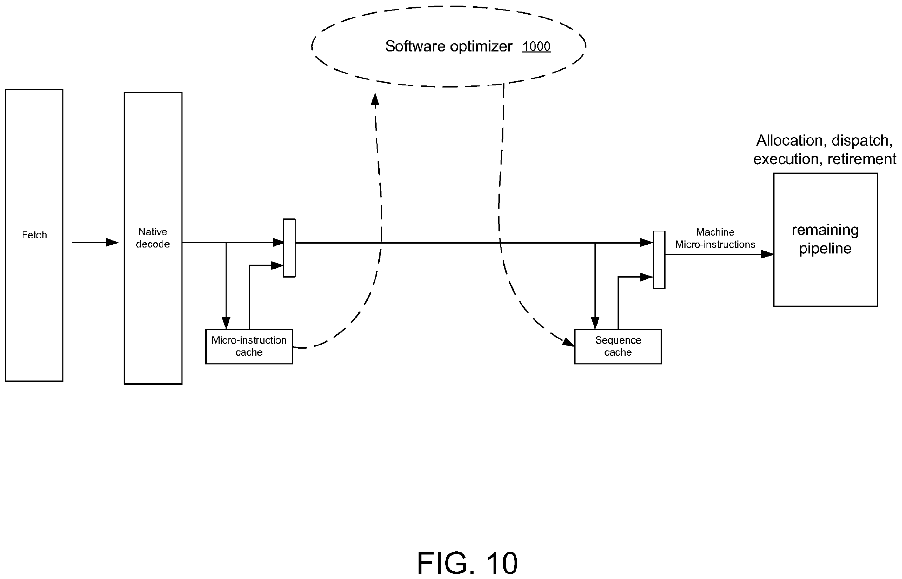

Figure 9 shows a diagram illustrating optimized scheduling a load ahead of a store in accordance with one embodiment of the present invention. As illustrated in Figure 9, a hardware optimized example is depicted alongside a traditional just-in-time compiler example. The left-hand side of Figure 9 shows the original un-optimized code including the store, "R3 <- LD [R5]". The middle column of Figure 9 shows a traditional just-in-time compiler optimization, where registers are renamed and the load is moved ahead of the store. In this example, the just-in-time compiler inserts compensation code to account for those occasions where the address of the load instruction aliases the address of the store instruction (e.g., where the load movement ahead of the store is not appropriate). In contrast, the right column of Figure 9 shows the hardware unrolled optimization. In this case, the registers are renamed and the load is also moved ahead of the store. However, it should be noted that no compensation code is inserted. In a case where moving the load ahead of the store is wrong, the hardware automatically rolls back it's state in order to execute the correct instruction sequence. The hardware optimizer solution is able to avoid the use of compensation code because in those cases where the address alias-check branch is miss predicted, the hardware jumps to the original code in memory and executes the correct sequence from there, while flushing the miss predicted instruction sequence. In this case, the sequence assumes no aliasing. It should be noted that in one embodiment, the functionality diagrammed in Figure 9 can be implemented by instruction scheduling and optimizer component 110 of Figure 1. Similarly, it should be noted that in one embodiment, the functionality diagrammed in Figure 9 can be implemented by the software optimizer 1000 described in Figure 10 below.

Additionally, with respect to dynamically unrolled sequences, it should be noted that instructions can pass prior path predicted branches (e.g., dynamically constructed branches) by using renaming. In the case of non-dynamically predicted branches, movements of instructions should consider the scopes of the branches. Loops can be unrolled to the extent desired and optimizations can be applied across the whole sequence. For example, this can be implemented by renaming destination registers of instructions moving across branches. One of the benefits of this feature is the fact that no compensation code or extensive analysis of the scopes of the branches is needed. This feature thus greatly speeds up and simplifies the optimization process.

Additional information concerning branch prediction and the assembling of instruction sequences can be found in commonly assigned US Patent Application serial number 61/384,198, titled "SINGLE CYCLE MULTI-BRANCH PREDICTION INCLUDING SHADOW CACHE FOR EARLY FAR BRANCH PREDICTION" by Mohammad A. Abdallah, filed on 9-17-2010.

Figure 10 shows a diagram of an exemplary software optimization process in accordance with one embodiment of the present invention. In the Figure 10 embodiment, the instruction scheduling and optimizer component (e.g., component 110 of Figure 1) is replaced by a software-based optimizer 1000.

In the Figure 10 embodiment, the software optimizer 1000 performs the optimization processing that was performed by the hardware-based instruction scheduling and optimizer component 110. The software optimizer maintains a copy of optimized sequences in the memory hierarchy (e.g., LI, L2, system memory). This allows the software optimizer to maintain a much larger collection of optimized sequences in comparison to what is stored in the sequence cache.

It should be noted that the software optimizer 1000 can comprise code residing in the memory hierarchy as both input to the optimization and output from the optimization process.

It should be noted that in one embodiment, the microinstruction cache can be omitted. In such an embodiment, only the optimized microinstruction sequences are cached.

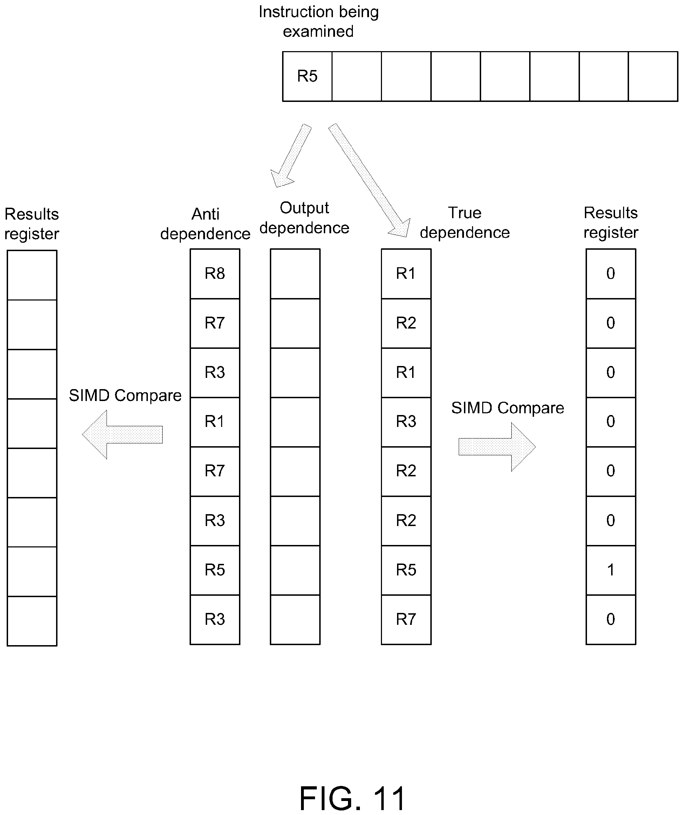

Figure 11 shows a flow diagram of a SIMD software-based optimization process in accordance with one embodiment of the present invention. The top of Figure 11 shows how the software-based optimizer examines each instruction of an input instruction sequence. Figure 11 shows how a SIMD compare can be used to match one to many (e.g., SIMD byte compare a first source "Src1"to all second source bytes "Src2"). In one embodiment, Src1 contains the destination register of any instruction and Src2 contains one source from each other subsequent instruction. Matching is done for every destination with all subsequent instruction sources (e.g., true dependence checking). This is a pairing match that indicates a desired group for the instruction. Matching is done between each destination and every subsequent instruction destination (e.g., output dependence checking). This is a blocking match that can be resolved with renaming. Matching is done between each destination and every prior instruction source (e.g., anti dependence checking). This is a blocking match that can be resolved by renaming. The results are used to populate the rows and columns of the dependency matrix.

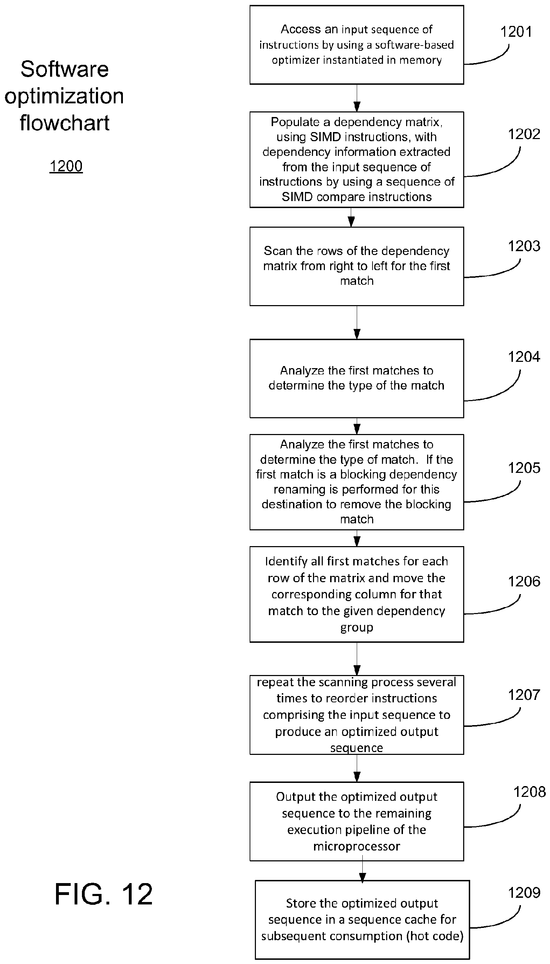

Figure 12 shows a flowchart of the operating steps of an exemplary SIMD software-based optimization process 1200. Process 1200 is described in the context of the flow diagram of Figure 9.

In step 1201, an input sequence of instructions is accessed by using a software-based optimizer instantiated memory.

In step 1202, a dependency matrix is populated, using SIMD instructions, with dependency information extracted from the input sequence of instructions by using a sequence of SIMD compare instructions.

In step 1203, the rows of the matrix are scanned from right to left for the first match (e.g., dependency mark).

In step 1204, each of the first matches are analyzed to determine the type of the match.

In step 1205, if the first marked match is a blocking dependency, renaming is done for this destination.

In step 1206, all first matches for each row of the matrix are identified and the corresponding column for that match is moved to the given dependency group.

In step 1207, the scanning process is repeated several times to reorder instructions comprising the input sequence to produce an optimized output sequence.

In step 1208, the optimized instruction sequence is output to the execution pipeline of the microprocessor for execution.

In step 1209, the optimized output sequence is stored in a sequence cache for subsequent consumption (e.g., to accelerate hot code).

It should be noted that the software optimization can be done serially with the use of SIMD instructions. For example, the optimization can be implemented by processing one instruction at a time scanning instructions' sources and destinations (e.g., from earlier instructions to subsequent instructions in a sequence). The software uses SIMD instructions to compare in parallel current instruction sources and destinations with prior instruction sources and destinations in accordance with the above described optimization algorithm and SIMD instructions (e.g. to detect true dependencies, output dependencies and anti-dependencies).

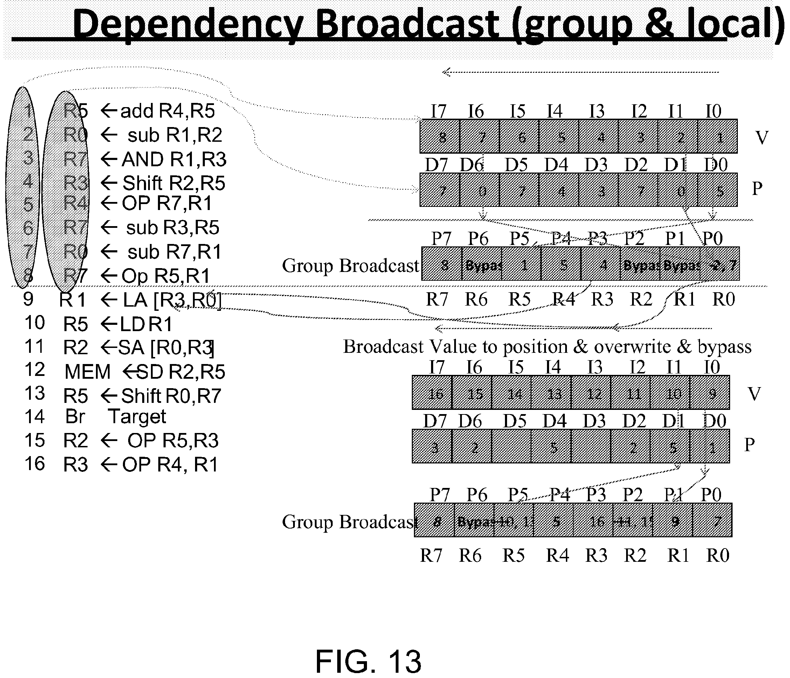

Figure 13 shows a software based dependency broadcast process Figure 13 shows a flow diagram of an exemplary software scheduling process that processes groups of instructions without the expense of a full parallel hardware implementation as described above. However, the Figure 13 background example can still use SIMD to process smaller groups of instructions in parallel.

The software scheduling process of Figure 13 proceeds as follows. First, the process initializes three registers. The process takes instruction numbers and loads them into a first register. The process then takes destination register numbers and loads them into a second register. The process then takes the values in the first register and broadcasts them to a position in the third result register in accordance with a position number in the second register. The process then over writes, going from left to right in the second register, the leftmost value will overwrite a right value in those instances where broadcast goes to the same position in the result register. Positions in the third register that have not been written to are bypassed. This information is used to populate a dependency matrix.

The Figure 13 background example also shows the manner in which an input sequence of instructions can be processed as a plurality of groups. For example, a 16 instruction input sequence can be processed as a first group of 8 instructions and a second group of 8 instructions. With the first group, instruction numbers are loaded into the first register, instruction destination numbers are loaded into the second register, and the values in the first register are broadcast to positions in the third register (e.g., the result register) in accordance with the position number in the second register (e.g., a group broadcast). Positions in the third register that have not been written to are bypassed. The third register now becomes a base for the processing of the second group. For example, the result register from group 1 now becomes the result register for the processing of group two.

With the second group, instruction numbers are loaded into the first register, instruction destination numbers are loaded into the second register, and the values in the first register are broadcast to positions in the third register (e.g., the result register) in accordance with the position number in the second register. Positions in the third register can over write the result that was written during the processing of the first group. Positions in the third register that have not been written to are bypassed. In this manner, the second group updates the base from the first group, and thereby produces a new base for the processing of a third group, and so on.

Instructions in the second group can inherit dependency information generated in the processing of the first group. It should be noted that the entire second group does not have to be processed to update dependency in the result register. For example, dependency for instruction 12 can be generated in the processing of the first group, and then processing instructions in the second group up to instruction 11. This updates the result register to a state up to instruction 12. A mask can be used to prevent the updates for the remaining instructions of the second group (e.g., instructions 12 through 16). To determine dependency for instruction 12, the result register is examined for R2 and R5. R5 will be updated with instruction 1, and Pv2 will be updated with instruction 11. It should be noted that in a case where all of group 2 is processed, R2 will be updated with instruction 15.

Additionally, it should be noted that all the instructions of the second group (e.g., instructions 9-16) can be processed independent of one another. In such case, the instructions of the second group depend only on the result register of the first group. The instructions of the second group can be processed in parallel once the result register is updated from the processing of the first group. In this manner, groups of instructions can be processed in parallel, one after another. In one background example, each group is processed using a SIMD instruction (e.g., a SIMD broadcast instruction), thereby processing all instructions of said each group in parallel.

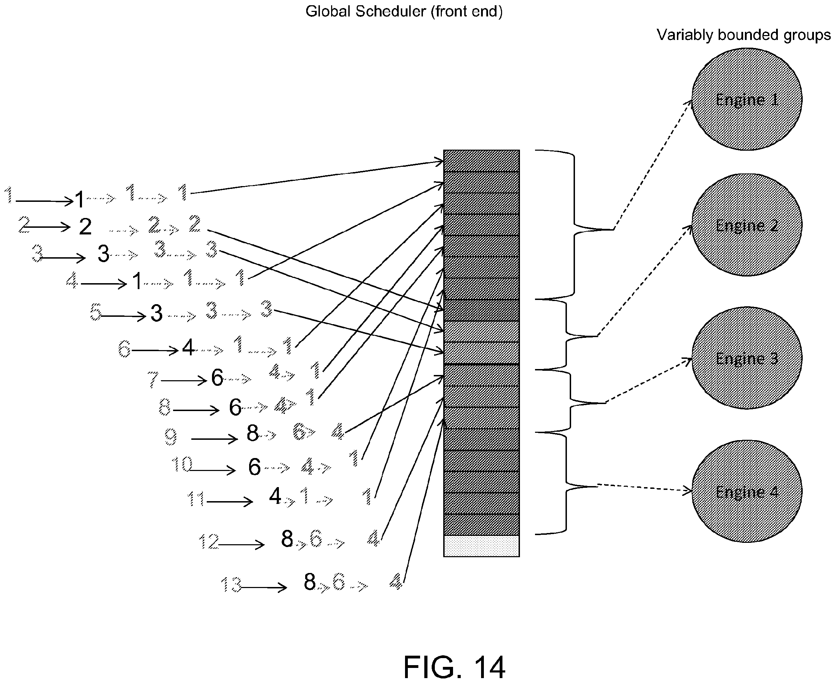

Figure 14 shows an exemplary flow diagram that shows how the dependency grouping of instructions can be used to build variably bounded groups of dependent instructions in accordance with one embodiment of the present invention. In the descriptions of Figures 2 through 4, the group sizes were constrained, in those cases three instructions per group. Figure 14 shows how instructions can be reordered into variably sized groups, which then can be allocated to a plurality of computing engines. For example, Figure 14 shows 4 engines. Since the groups can be variably sized depending on their characteristics, engine 1 can be allocated a larger group than, for example, engine 2. This can occur, for example, in a case where engine 2 has an instruction that is not particularly dependent upon the other instructions in that group.

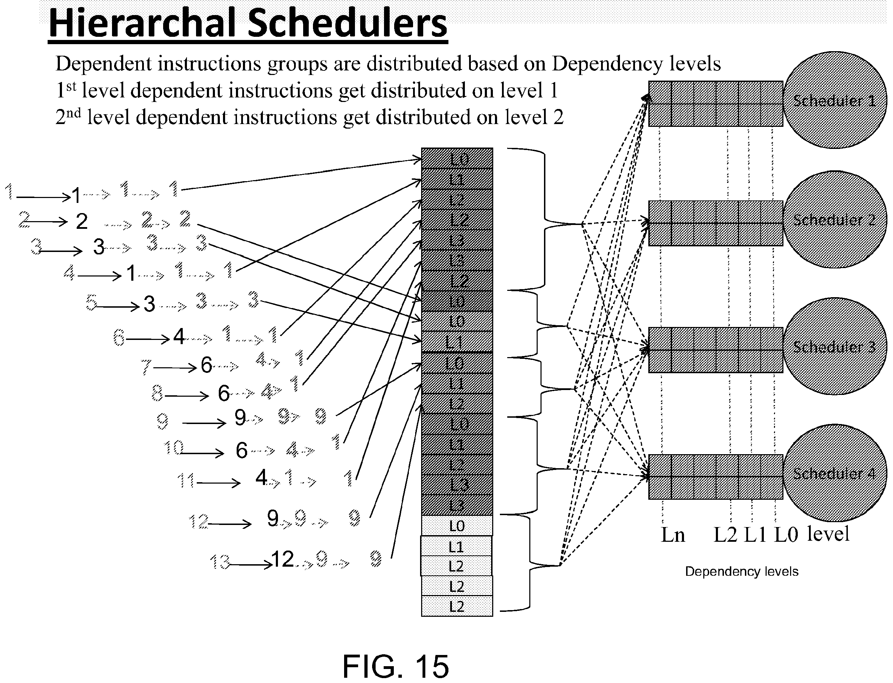

Figure 15 shows a flow diagram depicting hierarchical scheduling of instructions in accordance with one embodiment of the present invention. As described above, dependency grouping of instructions can be used to build variably bounded groups. Figure 15 shows the feature wherein various levels of dependency exist within a dependency group. For example, instruction 1 does not depend on any other instruction within this instruction sequence, therefore making instruction 1 an L0 dependency level. However, instruction 4 depends on instruction 1, therefore making instruction 4 an L1 dependency level. In this manner, each of the instructions of an instruction sequence is assigned a dependency level as shown.

The dependency level of each instruction is used by a second-level hierarchical scheduler to dispatch instructions in such a manner as to ensure resources are available for dependent instructions to execute. For example, in one embodiment,L0 instructions are loaded into instruction queues that are processed by the second-level schedulers 1-4. The L0 instructions are loaded such that they are in front of each of the queues, the L1 instructions are loaded such that they follow in each of the queues, L2 instructions follow them, and so on. This is shown by the dependency levels, from L0 to Ln in Figure 15. The hierarchical scheduling of the schedulers 1-4 advantageously utilizes the locality-in-time and the instruction-to-instruction dependency to make scheduling decisions in an optimal way.

In this manner, embodiments of the present invention intimate dependency group slot allocation for the instructions of the instruction sequence. For example, to implement an out of order microarchitecture, the dispatching of the instructions of the instruction sequence is out of order. In one embodiment, on each cycle, instruction readiness is checked. An instruction is ready if all instructions that it depends upon have previously dispatched. A scheduler structure functions by checking those dependencies. In one embodiment, the scheduler is a unified scheduler and all dependency checking is performed in the unified scheduler structure. In another embodiment, the scheduler functionality is distributed across the dispatch queues of execution units of a plurality of engines. Hence, in one embodiment the scheduler is unified while in another embodiment the scheduler is distributed. With both of these solutions, each instruction source is checked against the dispatch instructions' destination every cycle.

Thus, Figure 15 shows the hierarchical scheduling as performed by embodiments of the present invention. As described above, instructions are first grouped to form dependency chains (e.g., dependency groups). The formation of these dependency chains can be done statically or dynamically by software or hardware. Once these dependency chains have been formed, they can be distributed/dispatched to an engine. In this manner, grouping by dependency allows for out of order scheduling of in order formed groups. Grouping by dependency also distributes entire dependency groups onto a plurality of engines (e.g., cores or threads). Grouping by dependency also facilitates hierarchical scheduling as described above, where dependent instructions are grouped in a first step and then scheduled in a second step.

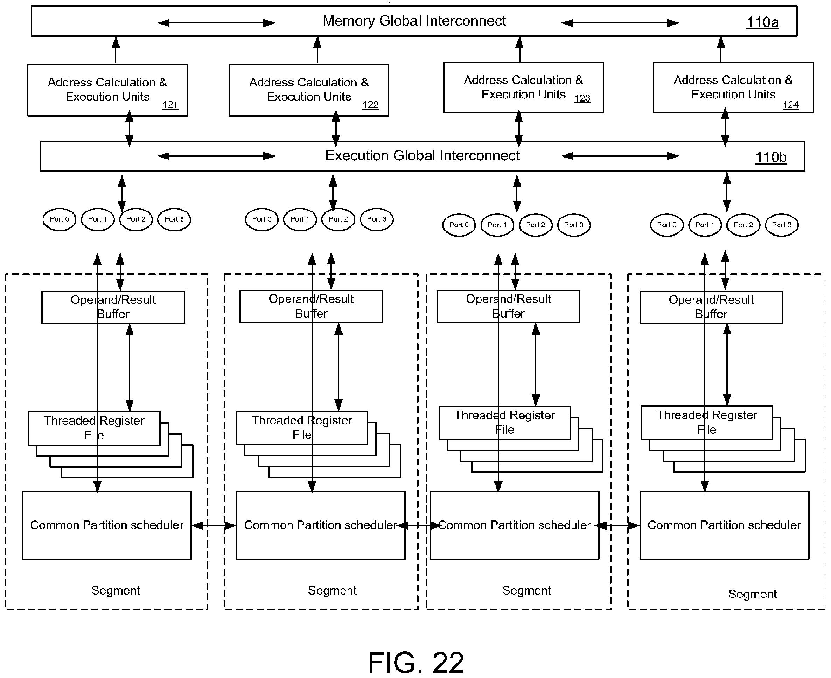

It should be noted that the functionality diagrammed in the Figures 14-19 can function independently from any method by which instructions are grouped (e.g., whether the grouping functionality is implemented in hardware, software, etc.). Additionally, the dependency groups shown in Figures 14-19 can comprise a matrix of independent groups, where each group further comprises dependent instructions. Additionally, it should be noted that the schedulers can also be engines. In such embodiment, each of the schedulers 1-4 can be incorporated within its respective engine (e.g., as shown in Figure 22 where each segment includes a common partition scheduler).

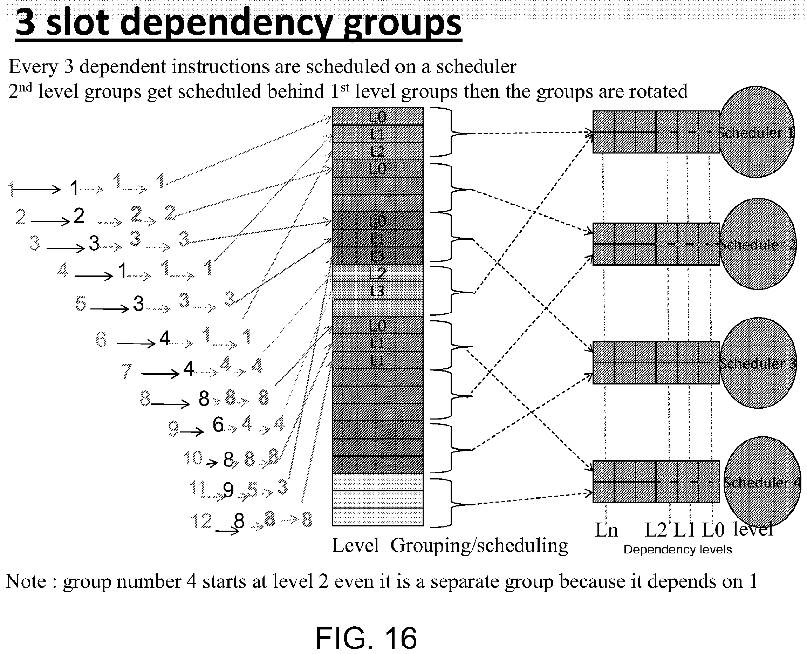

Figure 16 shows a flow diagram depicting hierarchical scheduling of three slot dependency group instructions in accordance with one embodiment of the present invention. As described above, dependency grouping of instructions can be used to build variably bounded groups. In this embodiment, the dependency groups comprise three slots. Figure 16 shows the various levels of dependency even within a three slot dependency group. As described above, instruction 1 does not depend on any other instruction within this instruction sequence, therefore making instruction 1 an L0 dependency level. However, instruction 4 depends on instruction 1, therefore making instruction 4 an L1 dependency level. In this manner, each of the instructions of an instruction sequence is assigned a dependency level as shown.

As described above, the dependency level of each instruction is used by a second-level hierarchical scheduler to dispatch instructions in such a manner as to ensure resources are available for dependent instructions to execute. L0 instructions are loaded into instruction queues that are processed by the second-level schedulers 1-4. The L0 instructions are loaded such that they are in front of each of the queues, the L1 instructions are loaded such that they follow in each of the queues, L2 instructions follow them, and so on, as shown by the dependency levels, from L0 to Ln in Figure 16. It should be noted that group number four (e.g., the fourth group from the top) begins at L2 even though it is a separate group. This is because instruction 7 depends from instruction 4, which depends from instruction 1, thereby giving instructions 7 an L2 dependency.

In this manner, Figure 16 shows how every three dependent instructions are scheduled together on a given one of the schedulers 1-4. The second-level groups it scheduled behind the first level groups, then the groups are rotated.

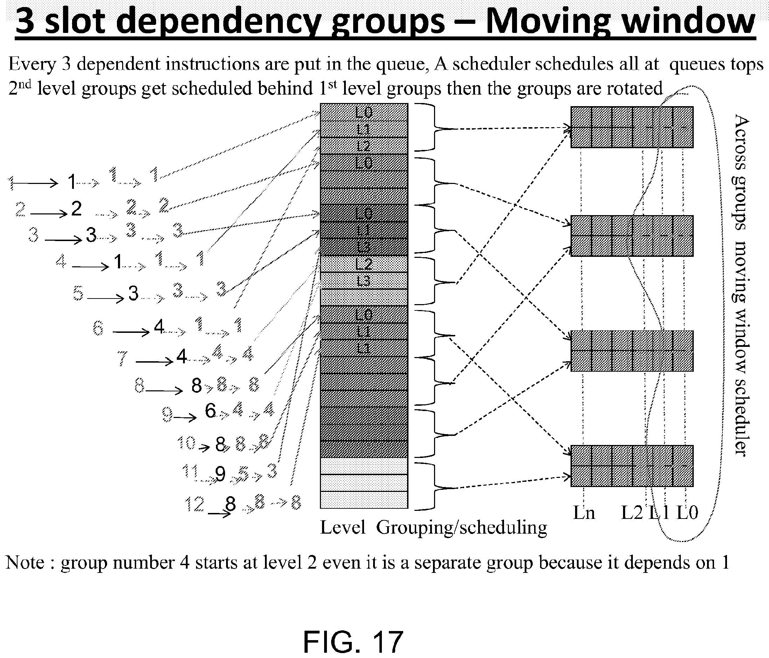

Figure 17 shows a flow diagram depicting hierarchical moving window scheduling of three slot dependency group instructions in accordance with one embodiment of the present invention. In this embodiment, the hierarchical scheduling for the three slot dependency groups is implemented via a unified moving window scheduler. A moving window scheduler processes the instructions in the queues to dispatch instructions in such a manner as to ensure resources are available for dependent instructions to execute. As described above, L0 instructions are loaded into instruction queues that are processed by the second-level schedulers 1-4. The L0 instructions are loaded such that they are in front of each of the queues, the LI instructions are loaded such that they follow in each of the queues, L2 instructions follow them, and so on, as shown by the dependency levels, from L0 to Ln in Figure 17. The moving window illustrates how L0 instructions can be dispatched from each of the queues even though they may be more in one queue than another. In this manner, the moving window scheduler dispatches instructions as the queues flow from left to right as illustrated in Figure 17.

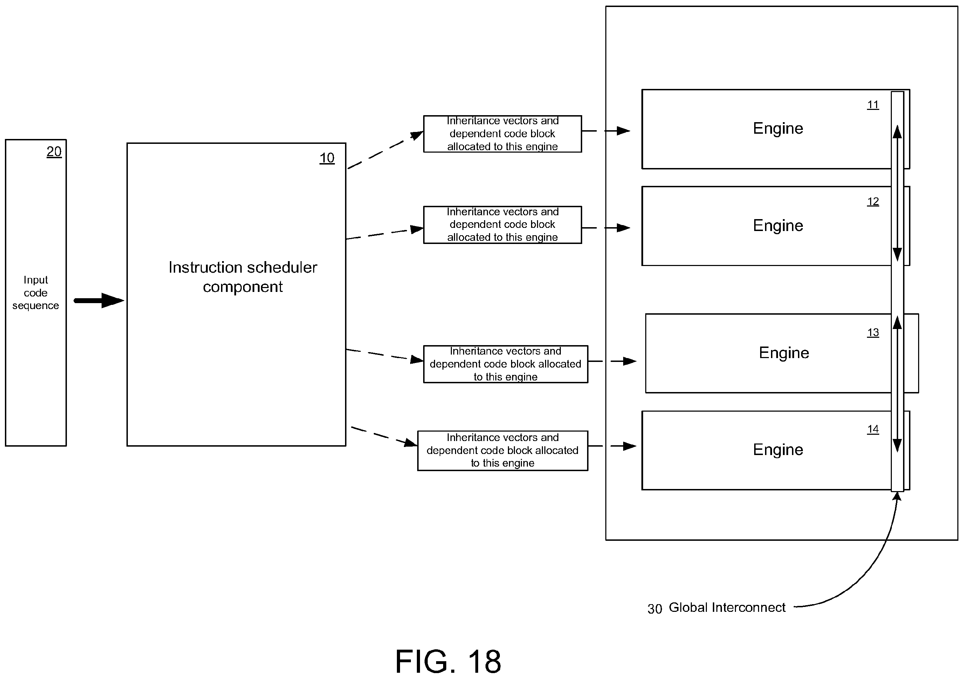

Figure 18 shows how the variably sized dependent chains (e.g., variably bounded groups) of instructions are allocated to a plurality of computing engines in accordance with one embodiment of the present invention.

As depicted in Figure 18, the processor includes an instruction scheduler component 10 and a plurality of engines 11-14. The instruction scheduler component generates code blocks and inheritance vectors to support the execution of dependent code block (e.g., variably bound group) on their respective engines. Each of the dependent code blocks can belong to the same logical core/thread or to different logical cores/threads. The instruction scheduler component will process the dependent code blocks to generate and respective inheritance vectors. These dependent code blocks and respective inheritance vectors are allocated to the particular engines 11-14 as shown. A global interconnect 30 supports a necessary communication across each of the engines 11-14. It should be noted that the functionality for the dependency grouping of instructions to build variably bounded groups of dependent instructions as described above in the discussion Figure 14 is implemented by the instruction scheduler component 10 of the Figure 18 embodiment.

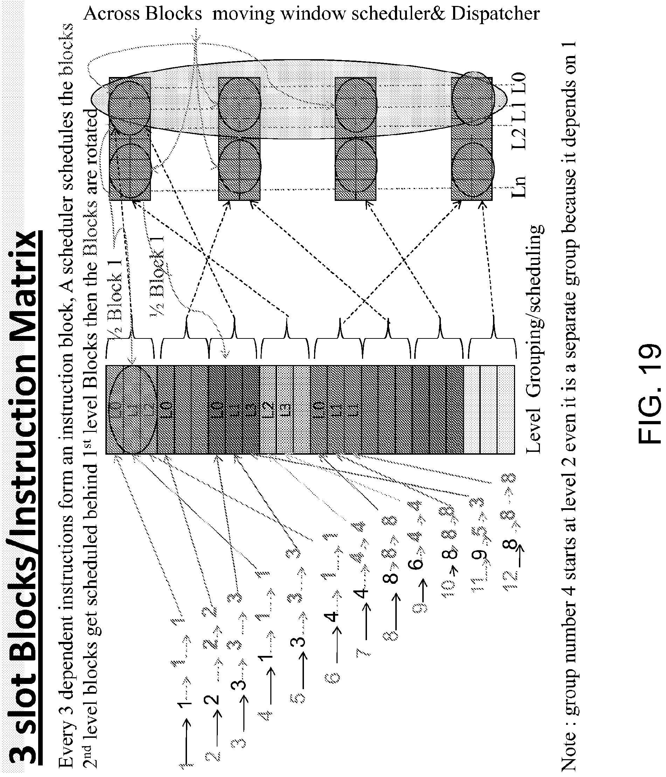

Figure 19 shows a flow diagram depicting block allocation to the scheduling queues and the hierarchical moving window scheduling of three slot dependency group instructions in accordance with one embodiment of the present invention. As described above, the hierarchical scheduling for the three slot dependency groups can be implemented via a unified moving window scheduler. Figure 19 shows how dependency groups become blocks that are loaded into the scheduling queues. In Figure 19 embodiment, two independent groups can be loaded in each queue as half blocks. This is shown at the top of Figure 19 where group 1 forms one half block and group 4 forms another half block that is loaded into the first scheduling queue.

As described above, moving window scheduler processes the instructions in the queues to dispatch instructions in such a manner as to ensure resources are available for dependent instructions to execute. The bottom of Figure 19 shows how LO instructions are loaded into instruction queues that are processed by the second-level schedulers.

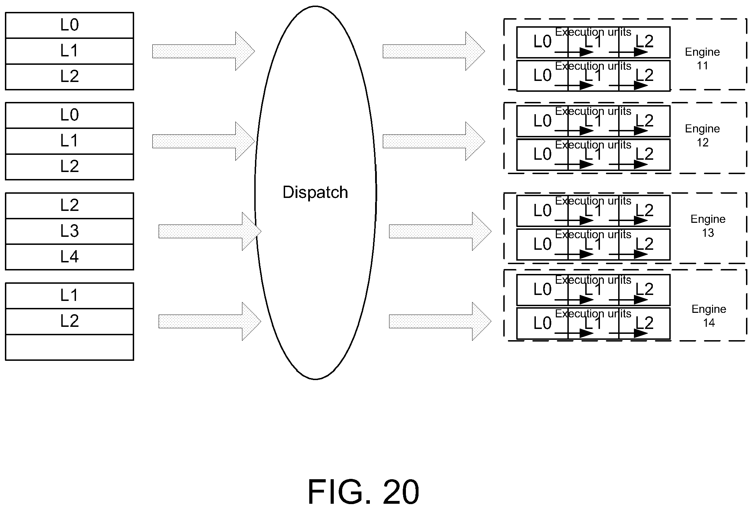

Figure 20 shows how the dependent code blocks (e.g., dependency groups or dependency chains) are executed on the engines 11-14 in accordance with one embodiment of the present invention. As described above, instruction scheduler component generates code blocks and inheritance vectors to support the execution of dependent code blocks (e.g., variably bound group, three slot group, etc.) on their respective engines. As described above in Figure 19, Figure 20 further shows how two independent groups can be loaded into each engine as code blocks. Figure 20 shows how these code blocks are dispatched to the engines 11-14, where the dependent instructions execute on the stacked (e.g., serially connected) execution units of each engine. For example, in the first dependency group, or code block, on the top left of Figure 20, the instructions are dispatched to the engine 11 wherein they are stacked on the execution unit in order of their dependency such that L0 is stacked on top of LI which is further stacked on L2. In so doing, the results of L0 to flow to the execution unit of LI which can then flow to the execution of L2.

In this manner, the dependency groups shown in Figure 20 can comprise a matrix of independent groups, where each group further comprises dependent instructions. The benefit of the groups being independent is the ability to dispatch and execute them in parallel and the attribute whereby the need for communication across the interconnect between the engines is minimized. Additionally, it should be noted that the execution units shown in the engines 11-14 can comprise a CPU or a GPU.

In accordance with embodiments of the present invention, it should be appreciated that instructions are abstracted into dependency groups or blocks or instruction matrices in accordance with their dependencies. Grouping instructions in accordance with their dependencies facilitates a more simplified scheduling process with a larger window of instructions (e.g., a larger input sequence of instructions). The grouping as described above removes the instruction variation and abstracts such variation uniformly, thereby allowing the implementation of simple, homogenous and uniform scheduling decision-making. The above described grouping functionality increases the throughput of the scheduler without increasing the complexity of the scheduler. For example, in a scheduler for four engines, the scheduler can dispatch four groups where each group has three instructions. In so doing, the scheduler only handles four lanes of super scaler complexity while dispatching 12 instructions. Furthermore, each block can contain parallel independent groups which further increase the number of dispatched instructions.

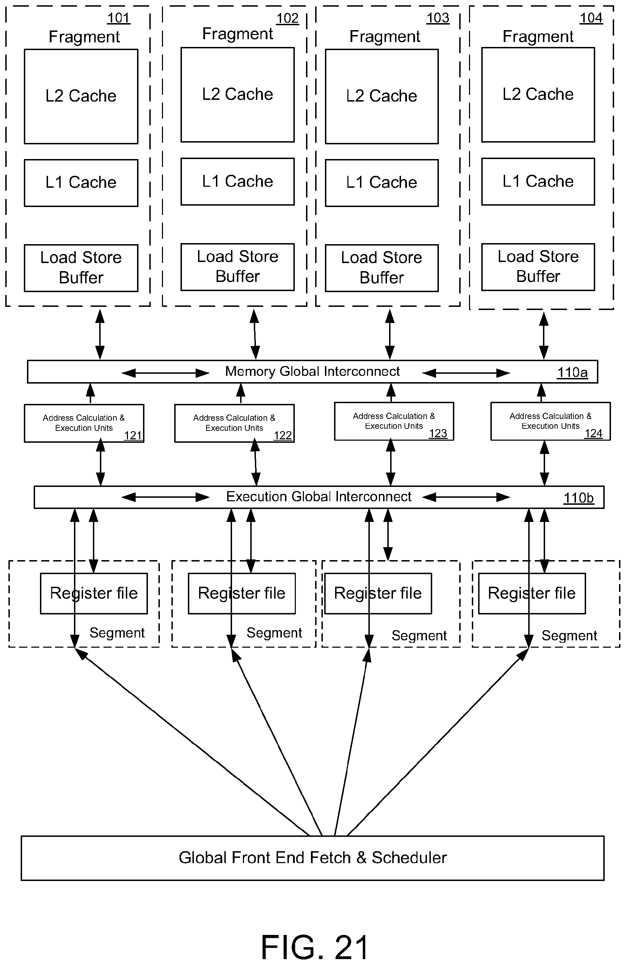

Figure 21 shows an overview diagram of a plurality of engines and their components, including a global front end fetch & scheduler and register files, global interconnects and a fragmented memory subsystem for a multicore processor in accordance with one embodiment of the present invention. As depicted in Figure 21, four memory fragments 101-104 are shown. The memory fragmentation hierarchy is the same across each cache hierarchy (e.g., LI cache, L2 cache, and the load store buffer). Data can be exchanged between each of the LI caches, each of the L2 caches and each of the load store buffers through the memory global interconnect 110a.

The memory global interconnect comprises a routing matrix that allows a plurality of cores (e.g., the address calculation and execution units 121-124) to access data that may be stored at any point in the fragmented cache hierarchy (e.g., LI cache, load store buffer and L2 cache). Figure 21 also depicts the manner whereby each of the fragments 101-104 can be accessed by address calculation and execution units 121-124 through the memory global interconnect 110a.

The execution global interconnect 110b similarly comprises a routing matrix allows the plurality of cores (e.g., the address calculation and execution units 121-124) to access data that may be stored at any of the segmented register files. Thus, the cores have access to data stored in any of the fragments and to data stored in any of the segments through the memory global interconnect 110a or the execution global interconnect 110b.

Figure 21 further shows a global front end fetch & scheduler which has a view of the entire machine and which manages the utilization of the register files segments and the fragmented memory subsystem. Address generation comprises the basis for fragment definition. The global front end Fetch & scheduler functions by allocating instruction sequences to each segment.

Figure 22 shows a plurality of segments, a plurality of segmented common partition schedulers and the interconnect and the ports into the segments in accordance with one embodiment of the present invention. As depicted in Figure 22, each segment is shown with a common partition scheduler. The common partition scheduler functions by scheduling instructions within its respective segment. These instructions were in turn received from the global front end fetch and scheduler. In this embodiment, the common partition scheduler is configured to function in cooperation with the global front end fetch and scheduler. The segments are also shown with 4 read write ports that provide read/write access to the operand/result buffer, threaded register file, and common partition or scheduler.

In one embodiment, a non-centralized access process is implemented for using the interconnects and the local interconnects employ the reservation adder and a threshold limiter control access to each contested resource, in this case, the ports into each segment. In such an embodiment, to access a resource, a core needs to reserve the necessary bus and reserve the necessary port.

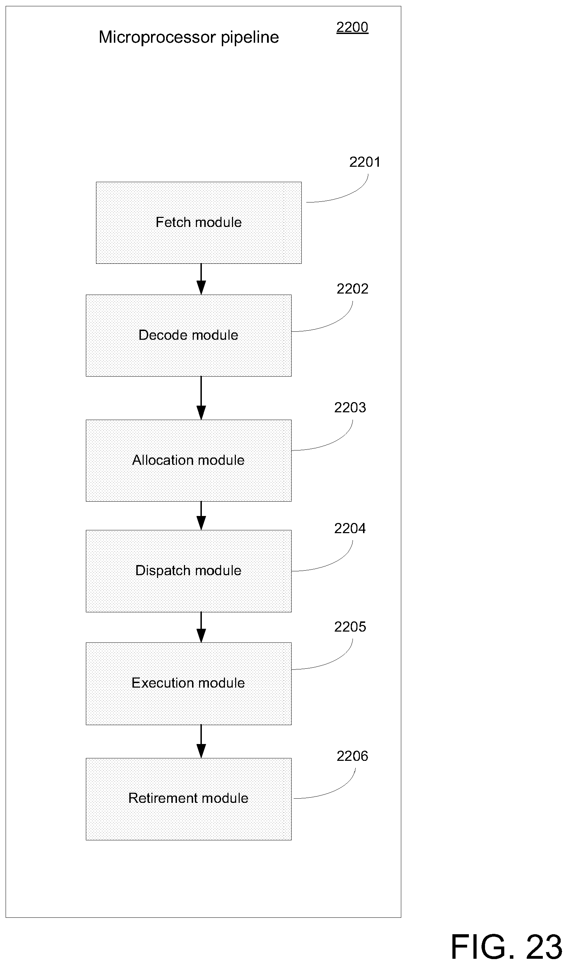

Figure 23 shows a diagram of an exemplary microprocessor pipeline 2300 in accordance with one embodiment of the present invention. The microprocessor pipeline 2300 includes a fetch module 2301 that implements the functionality of the process for identifying and extracting the instructions comprising an execution, as described above. In the Figure 23 embodiment, the fetch module is followed by a decode module 2302, an allocation module 2303, a dispatch module 2304, an execution module 2305 and a retirement module 2306. It should be noted that the microprocessor pipeline 2300 is just one example of the pipeline that implements the functionality of embodiments of the present 10 invention described above. One skilled in the art would recognize that other microprocessor pipelines can be implemented that include the functionality of the decode module described above.

## Claims

1. A hardware based or software based method for scheduling and reordering instructions at an allocation/issue stage of a microprocessor, the method comprising:
accessing an input sequence of instructions;
wherein the method is **characterized by**:
scanning the input sequence of instructions to locate true dependencies and flagging said true dependencies;
scanning the input sequence of instructions to locate output dependencies and flagging said output dependencies;
scanning the input sequence of instructions to locate anti-dependencies and flagging said anti-dependencies;
populating a dependency matrix in accordance with said true dependencies, said output dependencies and said anti-dependencies;
moving instructions flagged as true dependencies into a common group of instructions based on examining the dependency matrix to reorder the input sequence of instructions; and
using register renaming to remove instructions flagged as anti-dependencies;

2. The method of claim 1, wherein blocking instructions flagged as anti-dependencies are removed by register renaming to allow an instruction flagged as a true dependency to be moved past.

3. The method of claim 1, further comprising: performing a hazard checking process, wherein the dependency matrix is examined by the hazard checking process when reordering the input sequence of instructions.

4. The method of claim 1, wherein said method for scheduling and reordering instructions comprises an iterative process that precedes through a plurality of iterations looking for opportunities to move additional instructions into the common group of instructions.

5. The method of claim 1, wherein the dependency matrix is populated by using CAM matching array and broadcasting logic.

6. The method of claim 5, wherein destinations are broadcasted downward through the CAM matching array and through remaining instructions to be compared with subsequent instructions' sources and subsequent instructions' destinations to find true dependence.

7. The method of claim 5, wherein destinations can be broadcasted upward through CAM matching array and through previous instructions to be compared with prior instructions' sources to find anti-dependence.

8. The method of claim 5, wherein priority encoders are coupled to the CAM matching for scanning rows of the CAM matching array to find instructions flagged as true dependencies, instructions flagged as output dependencies and instructions flagged as anti-dependencies.

## Patentansprüche

1. Hardware-basiertes oder Software-basiertes Verfahren zum Terminieren und Neuordnen von Anweisungen in einer Zuteilungs-/Ausgabestufe eines Mikroprozessors, wobei das Verfahren Folgendes umfasst:
Zugreifen auf eine Anweisungseingabeabfolge,
wobei das Verfahren **gekennzeichnet ist durch**:
Durchsuchen der Anweisungseingabeabfolge, um echte Abhängigkeiten zu finden, und Kennzeichnen der echten Abhängigkeiten,
Durchsuchen der Anweisungseingabeabfolge, um Ausgabeabhängigkeiten zu finden, und Kennzeichnen der Ausgabeabhängigkeiten,
Durchsuchen der Anweisungseingabeabfolge, um Gegenabhängigkeiten zu finden, und Kennzeichnen der Gegenabhängigkeiten,
Füllen einer Abhängigkeitsmatrix gemäß den echten Abhängigkeiten, den Ausgabeabhängigkeiten und den Gegenabhängigkeiten,
Verschieben als echte Abhängigkeiten gekennzeichneter Anweisungen in eine gemeinsame Gruppe von Anweisungen auf Grundlage eines Untersuchens der Abhängigkeitsmatrix, um die Anweisungseingabeabfolge neu zu ordnen, und
Verwenden von Registerumbenennung, um als Gegenabhängigkeiten gekennzeichnete Anweisungen zu entfernen.

2. Verfahren nach Anspruch 1, wobei als Gegenabhängigkeiten gekennzeichnete blockierende Anweisungen durch Registerumbenennung entfernt werden, um zu ermöglichen, dass eine als echte Abhängigkeit gekennzeichnete Anweisung vorbei verschoben wird.

3. Verfahren nach Anspruch 1, ferner umfassend:
Durchführen eines Gefahrenprüfungsprozesses, wobei die Abhängigkeitsmatrix beim Neuordnen der Anweisungseingabeabfolge von dem Gefahrenprüfungsprozess untersucht wird.

4. Verfahren nach Anspruch 1, wobei das Verfahren zum Terminieren und Neuordnen von Anweisungen einen iterativen Prozess umfasst, der durch eine Vielzahl von Iterationen voranschreitet, in denen er nach Gelegenheiten sucht, weitere Anweisungen in die gemeinsame Gruppe von Anweisungen zu verschieben.

5. Verfahren nach Anspruch 1, wobei die Abhängigkeitsmatrix unter Verwendung von CAM-Abgleichsanordnungs- und Übertragungslogik gefüllt wird.

6. Verfahren nach Anspruch 5, wobei Bestimmungsorte nach unten durch die CAM-Abgleichsanordnung und durch verbleibende Anweisungen übertragen werden, um mit Quellen nachfolgender Anweisungen und Bestimmungsorten nachfolgender Anweisungen verglichen zu werden, um echte Abhängigkeit zu finden.

7. Verfahren nach Anspruch 5, wobei Bestimmungsorte nach oben durch die CAM-Abgleichsanordnung und durch vorherige Anweisungen übertragen werden können, um mit Quellen früherer Anweisungen verglichen zu werden, um Gegenabhängigkeit zu finden.

8. Verfahren nach Anspruch 5, wobei Prioritätscodierer an den CAM-Abgleich gekoppelt werden, um Reihen der CAM-Abgleichsanordnung zu durchsuchen, um als echte Abhängigkeiten gekennzeichnete Anweisungen, als Ausgabeabhängigkeiten gekennzeichnete Anweisungen und als Gegenabhängigkeiten gekennzeichnete Anweisungen zu finden.

## Revendications

1. Procédé, à base matérielle ou logicielle, de planification et de réordonnancement d'instructions à un stade d'attribution/d'émission d'un microprocesseur, le procédé comportant les étapes consistant à :
accéder à une séquence d'entrée d'instructions ;
le procédé étant **caractérisé par** les étapes consistant à :
balayer la séquence d'entrée d'instructions pour localiser des dépendances vraies et marquer lesdites dépendances vraies ;
balayer la séquence d'entrée d'instructions pour localiser des dépendances de sortie et marquer lesdites dépendances de sortie ;
balayer la séquence d'entrée d'instructions pour localiser des anti-dépendances et marquer lesdites anti-dépendances ;
garnir une matrice de dépendances en fonction desdites dépendances vraies, desdites dépendances de sortie et desdites anti-dépendances ;
transférer les instructions marquées comme dépendances vraies dans un groupe commun d'instructions sur la base d'un examen de la matrice de dépendances pour réordonner la séquence d'entrée d'instructions ; et
utiliser un renommage de registres pour éliminer les instructions marquées comme anti-dépendances.

2. Procédé selon la revendication 1, des instructions bloquantes marquées comme anti-dépendances étant éliminées par renommage de registres pour permettre à une instruction marquée comme une dépendance vraie d'être déplacée devant celles-ci.

3. Procédé selon la revendication 1, comportant en outre l'étape consistant à :
effectuer un processus de vérification d'aléas, la matrice de dépendances étant examinée par le processus de vérification d'aléas lors du réordonnancement de la séquence d'entrée d'instructions.

4. Procédé selon la revendication 1, ledit procédé de planification et de réordonnancement d'instructions comportant un processus itératif qui progresse par une pluralité d'itérations en cherchant des opportunités pour transférer des instructions supplémentaires dans le groupe commun de instructions.

5. Procédé selon la revendication 1, la matrice de dépendances étant garnie en utilisant un tableau de correspondance de CAM et une logique de diffusion.

6. Procédé selon la revendication 5, les destinations étant diffusées vers le bas à travers le tableau de correspondance de CAM et à travers des instructions restantes pour être comparées à des sources d'instructions subséquentes et à des destinations d'instructions subséquentes afin de détecter une dépendance vraie.

7. Procédé selon la revendication 5, les destinations pouvant être diffusées vers le haut à travers le tableau de correspondance de CAM et à travers des instructions précédentes pour être comparées à des sources d'instructions antérieures afin de détecter une anti-dépendance.

8. Procédé selon la revendication 5, des codeurs de priorité étant couplés à la mise en correspondance de CAM pour balayer des lignes du tableau de correspondance de CAM afin de détecter des instructions marquées comme dépendances vraies, des instructions marquées comme dépendances de sortie et des instructions marquées comme anti-dépendances.
